# EUROPEAN PATENT APPLICATION

(11) **EP 3 979 084 A1**
(43) Date of publication of application: **06.04.2022**
(21) Application number: 19930800.8
(22) Date of filing: 30.05.2019
(51) Int. Cl.: G06F 13/00, G06Q 50/10

(54) **CONNECTION MANAGEMENT DEVICE, CONNECTION MANAGEMENT SYSTEM, CONNECTION MANAGEMENT METHOD, AND PROGRAM**

(71) Applicant: MITSUBISHI ELECTRIC CORPORATION, Chiyoda-ku Tokyo 100-8310 (JP)
(72) Inventor: NAKAJIMA Yoshinori, Tokyo 100-8310 (JP); MIZUNO Kanji, Tokyo 100-8310 (JP); KOMATSU Masayuki, Tokyo 100-8301 (JP); TAMURA Naoki, Tokyo 100-8310 (JP)
(74) Representative: Bongiovanni, Simone
(86) International application number: PCT/JP2019/021488
(87) International publication number: WO 2020/240769

(57) **Abstract**

A connection management device (100) is included in a terminal device, which is communicatively connected to a plurality of server devices. A location information acquirer (101) acquires location information indicating a location where the terminal device exists. A region determiner (102) determines based on the acquired location information, a region where the terminal device exists. A connection destination determiner (104) determines, based on the determined region, which of the plurality of server devices is the server device to which the terminal device is to connect. A transmitter (105) transmits to the determined server device a request for connection to connect to the server device.

## Description

### Technical Field

The present disclosure relates to a connection management device, a connection management system, a method of managing connection, and a program.

### Background Art

Recent prevalence of cloud computing offers easier data transfer to and storage in various countries, regions, and the like. However, different countries, regions, and so on have different laws and regulations on data processing that are to be complied with. For example, Europe has the EU General Data Protection Regulation (GDPR). The EU GDPR is a regulation designed to improve personal data protections and prohibits transfer of the personal data outside the European Economic Area.

In view of such circumstances, techniques of processing data while avoiding risks of non-compliance with the laws and regulations are proposed. For example, Patent Literature 1 discloses a technique of determining whether or not there is a possibility that uploading of data to a server device specified by a user is non-compliant with the laws and regulations, and presenting a result of the determination.

### Citation List

### Patent Literature

Patent Literature 1: International Publication No. WO 2013/065161

### Summary of Invention

### Technical Problem

Such a technique as described above can provide knowledge of whether or not uploading to the specified server fails to comply with the laws and regulations, but does not guarantee connection to a secure server device that avoids the risk of non-compliance with the laws and regulations. If the user at the time of data uploading specifies the server device, the user may specify, by erroneous operation or intentionally, a server device that is non-compliant with the laws and regulations.

In view of the above circumstances, an objective of the present disclosure is to provide a connection management device, connection management system, a connection management method, and a program capable of automatic connection of a terminal device to a secure server device that avoids the risk of non-compliance with laws and regulations.

### Solution to Problem

To achieve the above objective, a connection management device according to the present disclosure is included in a terminal device communicable with server devices, and includes: location information acquisition means for acquiring location information indicating a location where the terminal device exists; region determination means for determining, based on the location information acquired by the location information acquisition means, a region where the terminal device exists; connection destination determination means for determining, based on the region determined by the region determination means, which of the plurality of server devices is the server device to which the terminal device is to connect; and transmission means for transmitting, to the server device determined by the connection destination determination means, a request for connection to connect to the server device.

### Advantageous Effects of Invention

The present disclosure enables automatic connection of a terminal device to a secure server device to be connected to, based on a region where the terminal device exists. This can ensure an administrator of the server device complies with the laws and regulations on processing of data to be acquired from the terminal device.

### Brief Description of Drawings

FIG. 1 is a block diagram illustrating an overall configuration of a connection management system according to an embodiment;
FIG. 2 is a block diagram illustrating a hardware configuration of a connection management device and a terminal device according to the embodiment;
FIG. 3 is a block diagram illustrating a hardware configuration of a server device according to the embodiment;
FIG. 4 illustrates a connection topology of terminal devices and server devices according to the embodiment;
FIG. 5 is a block diagram illustrating a functional configuration of the connection management device according to the embodiment;
FIG. 6 illustrates regional information data according to the embodiment;
FIG. 7 illustrates another regional information data according to the embodiment;
FIG. 8 illustrates connection destination information data according to the embodiment;
FIG. 9 is a block diagram illustrating a functional configuration of the terminal device according to the embodiment;
FIG. 10 is a block diagram illustrating a functional configuration of the server device according to the embodiment;
FIG. 11 is a diagram illustrating personal information data according to the embodiment;
FIG. 12 is a sequence diagram illustrating a flow of process steps executed between the terminal devices and the server devices according to the embodiment;
FIG. 13 is a flowchart illustrating a connection management process executed by the connection management device according to the embodiment;
FIG. 14 is a block diagram illustrating an overall configuration of a connection management system according to a modified example; and
FIG. 15 is a block diagram illustrating an overall configuration of a connection management system according to a modified example.

### Description of Embodiments

### Embodiment

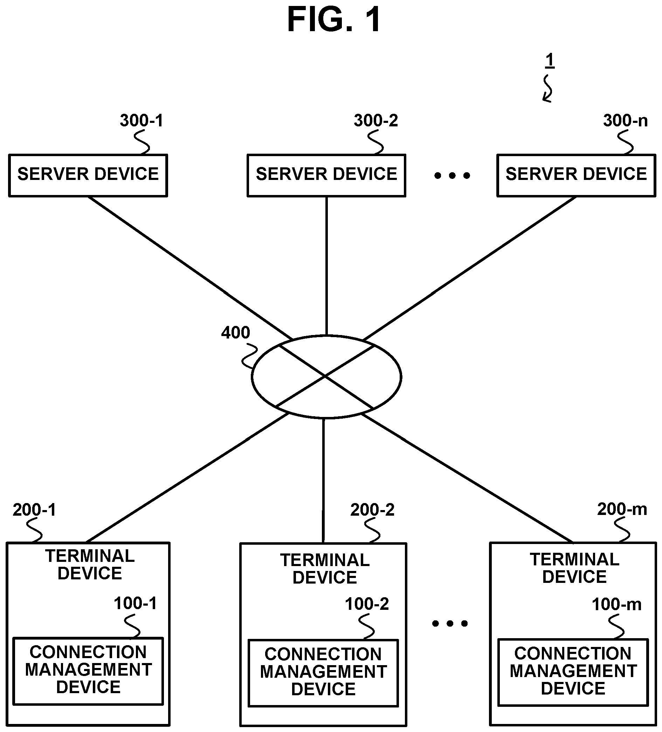

A connection management system according to the embodiment is a system capable of connecting a terminal device to a secure server device that avoids a risk of non-compliance with laws and regulations on processing of data of the terminal device. As illustrated in FIG. 1, a connection management system 1 includes connection management devices 100-1, 100-2, ..., and 100-m (m represents natural number not less than 2) to determine server devices to which terminal devices are to connect, terminal devices 200-1, 200-2, ..., and 200-m including the connection management devices, and server devices 300-1, 300-2, ..., and 300-n (n represents natural number not less than 2) that establish connection to the terminal devices to transmit and receive data. The connection management devices 100-1, 100-2, ..., and 100-m are collectively referred to as a connection management device 100, the terminal devices 200-1, 200-2, ..., and 200-m are collectively referred to as a terminal device 200, and the server devices 300-1, 300-2, ..., and 300-n are collectively referred to as a server device 300.

Relationships among the connection management device 100, the terminal device 200, and the server devices 300 are described with reference to FIG. 1.

Each of the connection management devices 100 is included in each of the terminal devices 200, which communicates with a plurality of server devices 300 via a network 400. The connection management device 100 determines the server device 300 to which the terminal device 200 is to connect, and transmits to the determined server device 300 a request for connection.

The terminal device 200 is a device used by a user who receives services provided by the server device 300. Examples of the terminal device 200 include a personal computer, a smartphone, and a tablet terminal. The terminal device 200 may be a device that is owned by the user or is lent out by a provider of the service. The terminal device 200 communicates with the server device 300 determined by the connection management device 100.

The server device 300 is typically a cloud server and is a device that provides services to the terminal device 200 with the connection established. The server device 300 establishes the connection to the terminal device 200 in response to the request for connection transmitted by the connection management device 100 in the terminal device 200. After the connection is established, the connection is by direct communication between the server device 300 and the terminal device 200 without interposition of the connection management device 100. The server device 300 performs transmission and reception, to and from the terminal device 200, of data necessary for providing services.

The network 400 is a wireless or wired communication network, and examples of the network 400 include the Internet, an intranet, an extranet, a local area network (LAN), a virtual private network (VPN), and a telephone network.

In the present embodiment, the server device 300 is assumed to provide services for automatic control of an air conditioner. The terminal device 200 is a device used by a user who operates the air conditioner, and has an installed application for operation of the air conditioner. Upon the user initially starting this application in the terminal device 200 after installing the application, a request for connection is transmitted from the connection management device 100 in the terminal device 200 to the server device 300. After the request for connection achieves establishment of the connection between the terminal device 200 and the server device 300, the server device 300 automatically controls the air conditioner operated by the user of the terminal device 200. The user can receive services such as power reception condition-based automatic control, automatic inspection, and the like.

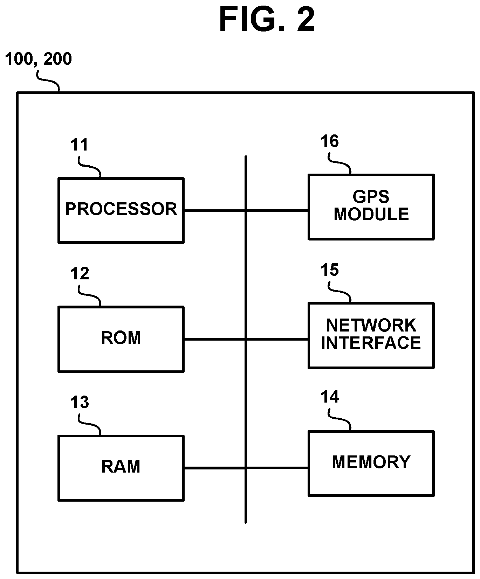

Next, hardware configurations of the connection management device 100 and the terminal device 200 are described with reference to FIG. 2. The connection management device 100 is included in the terminal device 200. The connection management device 100 is achieved by means of the hardware configuration of the terminal device 200.

The connection management device 100 and the terminal device 200 include a processor 11 that controls an operation of a devices, a read only memory (ROM) 12 that stores a program, a random access memory (RAM) 13 that is a work area, a memory 14 that can read and write data, a network interface 15 for connecting to a network, and a global positioning system (GPS) module 16 that finds a location of the terminal device 200. The components are connected to one another via buses.

The processor 11 includes a central processing unit (CPU). The processor 11 implements functions of the connection management device 100 and the terminal device 200 by executing a program stored in the ROM 12.

The ROM 12 stores the program and the data for controlling the whole operations of the connection management device 100 and the terminal device 200.

The RAM 13 serves as a work area for the processor 11. The processor 11 temporarily writes the program and data to the RAM 13 and refers to the program and the data as appropriate.

The memory 14 is a readable/writable non-volatile memory, such as an electrically erasable programmable read-only memory (EEPROM), flash memory or the like.

The network interface 15 is an interface for connection of the connection management device 100 and the terminal device 200 to the network 400. The network interface 15 includes a local area network (LAN) interface such as a network interface card (NIC).

The GPS module 16 determines latitude and longitude of a place where the terminal device 200 exists using information received from a GPS satellite.

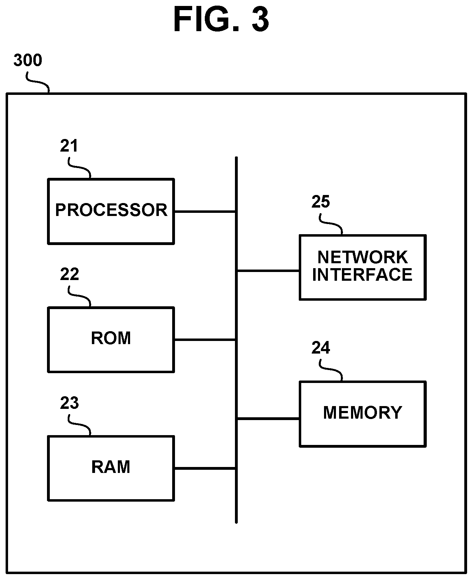

A hardware configuration of the server device 300 is described with reference to FIG. 3.

The server device 300 includes a processor 21 that controls an operation of a device, a ROM 22 that stores a program, a RAM 23 that is a work area, a memory 24 that can read and write data, and a network interface 25 for connection to the network. The components are connected to one another via buses.

The processor 21 includes a CPU. The processor 21 implements functions of the sever device 300 by executing a program stored in the ROM 22.

The ROM 22 stores the program and the data for controlling the whole operation of the server device 300.

The RAM 23 serves as a work area for the processor 21. The processor 21 temporarily writes the program and the data to the RAM 23 and refers to the program and data as appropriate.

The memory 24 is a readable/writable non-volatile memory such as an EEPROM, a flash memory, or the like.

The network interface 25 is an interface for connection of the server device 300 to the network 400. The network interface 25 includes a LAN interface such as an NIC.

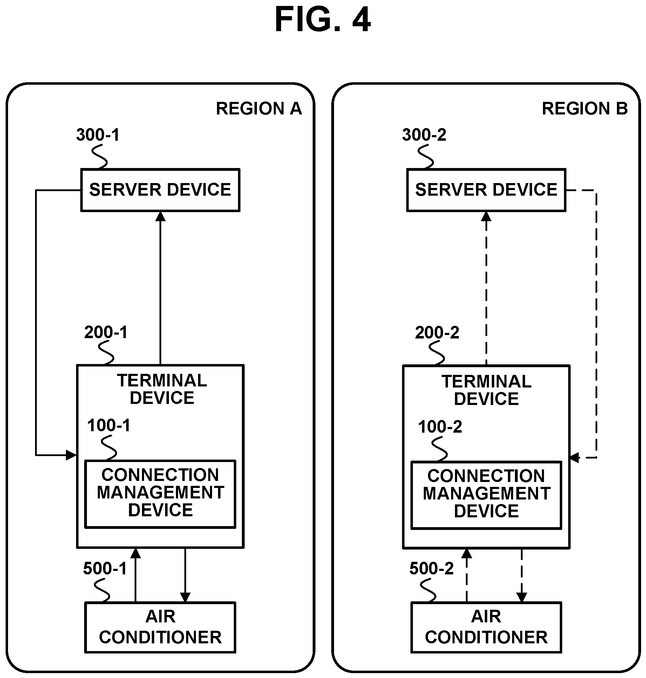

A connection topology of the terminal devices 200 including the connection management devices 100 and the server devices 300 upon initial start of an application after installation in the terminal device 200 is described with reference to FIG. 4. The following description assumes that the connection management devices 100-1 and 100-2 are achieved by execution of the application for operation of air conditioners 500-1 and 500-2 that have been installed in the terminal devices 200-1 and 200-2. The connection topology is described focusing on an example in which the connection management devices 100-1 and 100-2 transmit requests for connection.

In FIG. 4, the terminal device 200-1 including the connection management device 100-1, the server device 300-1, and the air conditioner 500-1 exist in a region A, and the terminal device 200-2 including the connection management device 100-2, the server device 300-2, and the air conditioner 500-2 exist in a region B. The region indicates a country, a state, a municipality, or the like. In FIG. 4, a solid line indicates connection between the devices made upon request for connection from the connection management device 100-1 and a dashed line indicates connection between the devices made upon request for connection from the connection management device 100-2.

Since the laws and regulations about processing of data are generally defined for each region, the connection management device 100 of the present embodiment manages the connections between the terminal device 200 and the server device 300 so that data transfer and storage are performed in the same region.

For example, upon initial start of an application after installation in the terminal device 200-1 existing in the region A, the connection management device 100-1 included in the terminal device 200-1 determines the server device 300-1 located in the same region A as the terminal device 200-1 to be the server device 300 to which the terminal device 200-1 is to connect. The connection management device 100-1 then transmits a request for connection including identification information for identifying the terminal device 200-1, to the server device 300-1. The server device 300-1transmits to the terminal device 200-1 a response indicating connection admission with the identification information. The terminal device 200-1 having received the response communicates directly with the server device 300-1 and establishes connection with the server device 300-1.

After establishment of the connection, the terminal device 200-1 receives from the server device 300-1 control information for automatic control of the air conditioner 500-1, and transmits the control information to the air conditioner 500-1. A setting temperature, a setting air volume, and the like of the air conditioner 500-1 are set based on the control information. The air conditioner 500-1 transmits to the terminal device 200-1 a setting completion notification, an operation change notification, a notification of power consumption of the air conditioner 500-1, and the like. The terminal device 200-1 transmits to the server device 300-1 the notification received from the air conditioner 500-1.

Upon initial start of an application after installation in the terminal device 200-2 existing in the region B, the connection management device 100-2 included in the terminal device 200-2 determines the server device 300-2 located in the same region B as the terminal device 200-2 to be the server device 300 to which the terminal device 200-2 is to connect. The connection management device 100-2 then transmits a request for connection including identification information for identifying the terminal device 200-2, to the server device 300-2. The server device 300-2 transmits to the terminal device 200-2a response indicating connection admission with the identification information. The terminal device 200-2 having received the response communicates directly with the server device 300-2 and establishes connection with the server device 300-2.

After establishment of the connection, the terminal device 200-2 receives from the server device 300-2 control information for automatic control of the air conditioner 500-2, and transmits the control information to the air conditioner 500-2. A setting temperature, a setting air volume, and the like of the air conditioner 500-2 are set based on the control information. The air conditioner 500-2 transmits to the terminal device 200-2 a setting completion notification, an operation change notification, a notification of power consumption of the air conditioner 500-2, and the like. The terminal device 200-2 transmits to the server device 300-2 the notification received from the air conditioner 500-2.

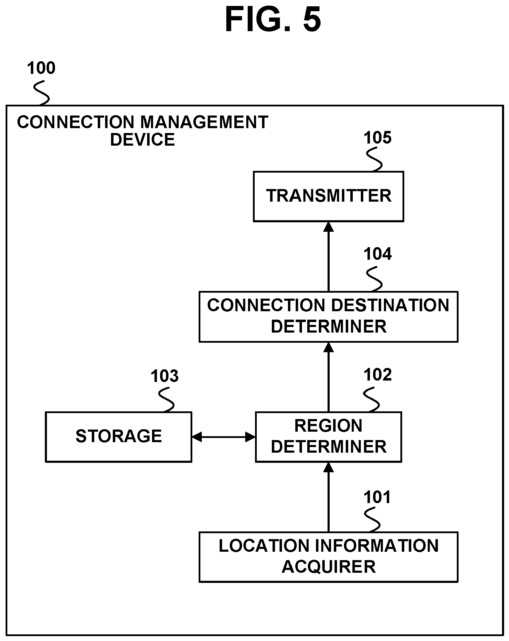

Next, functions of the connection management device 100 are described with reference to FIG. 5. The connection management device 100 includes a location information acquirer 101 that acquires location information of the terminal device 200, a region determiner 102 that determines a region of the terminal device 200 based on the acquired location information, a storage 103 that stores data that is the location information and the regional information associated with each other, a connection destination determiner 104 that determines, based on the determined region, a server device 300 to be connected to, and a transmitter 105 that transmits to the determined server device 300 a request for connection. The functions of the connection management device 100 described below are achieved by execution of the application installed in the terminal device 200.

The location information acquirer 101 acquires location information indicating a location where the terminal device 200 exists. The location information acquirer 101 is implemented by cooperation of the processor 11 with the network interface 15 and the GPS module 16. Here, the location information acquirer 101 is an example of location information acquisition means.

The location information is information indicating a location of the terminal device 200, such as latitude and longitude, an Internet Protocol (IP) address, or the like.

The latitude and longitude are latitude and longitude of the terminal device 200 determined by the GPS module 16 of the terminal device 200 or latitude and longitude indicating a location of a base station to which the terminal device 200 is connected.

The IP address is a global IP address used by the terminal device 200. The country-by-country allocation of global IP addresses is publicly known, and the country where the terminal device 200 exists can be known by reference to the global IP address.

Upon initial start of the application for operation of the air conditioner after installation in the terminal device 200, the location information acquirer 101 acquires the latitude and longitude indicating a location of the terminal device 200. For example, upon receiving a sentence
"$GPRMC,085120.307,A,3541.1493,N,13945.3994,E,000.0,240.3,181211,,,A^{∗}6A" from the GPS module 16, the location information acquirer 101 acquires the latitude "3541.1493, N" and the longitude "13945.3994, E" from the sentence.

Alternatively, the location information acquirer 101 may acquire the latitude and longitude of the base station to which the terminal device 200 is connected. In a case where the terminal device 200 exists in a cell covered by the base station, the base station notifies the latitude and longitude of the base station to the terminal device 200, and thus the location information acquirer 101 acquires the notified latitude and longitude of the base station.

The location information acquirer 101 may acquire the global IP address used by the terminal device 200.

The location information acquirer 101 may calculate, based on information from the GPS satellite and information from the base station, the latitude and longitude where the terminal device 200 exists.

In a case where the user allows finding of the location information from his or her address registered in the terminal device 200, the location information acquirer 101 may find the location information of the terminal device 200 from the user's address registered in the terminal device 200. The location information acquirer 101 may find the location information about the location where the terminal device 200 exists by the connection management device 100 communicating with a device other than the terminal device 200.

An administrator of the connection management device 100 can freely select, as the location information, any of the aforementioned location information such as the latitude and longitude, the global IP address, and the like or a combination thereof.

The region determiner 102 determines, based on the acquired location information, a region where the terminal device 200 exists. The region determiner 102 determines the region by reference to the data stored in the storage 103. The region determiner 102 is implemented by the processor 11. The region determiner 102 is an example of region determination means.

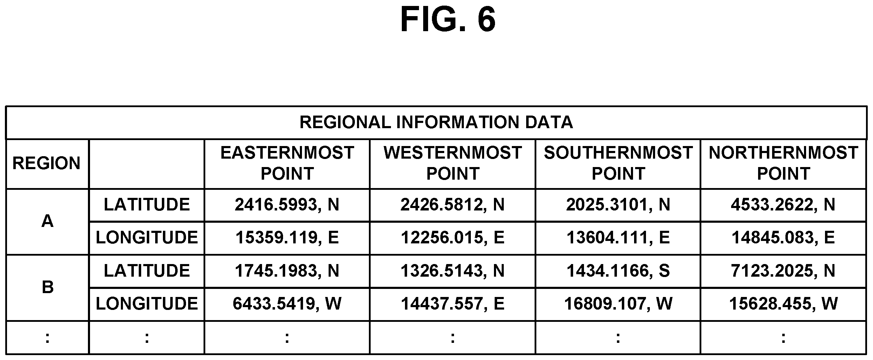

The storage 103 stores, in association with each other, regional information indicating a region and location information. For example, the storage 103 stores, in association with each other, regional information data that is data of the regional information and the latitude and longitude. FIG. 6 illustrates an example of the regional information data that is data of the regional information and the latitude and longitude associated with each other. The regional information data illustrated in FIG. 6 is stored in the memory 14. The storage 103 is an example of storage means.

In the table in FIG. 6, the region is associated with the latitudes and longitudes of the easternmost point, the westernmost point, the southernmost point, and northernmost point of the region. The data in the first row of the table in FIG. 6 indicates that the latitudes of the region "A" are "2416.5993, N" at the easternmost point, "2426.5812, N" at the westernmost point, "2025.3101, N" at the southernmost point, and "4533.2622, N" at the northernmost point.

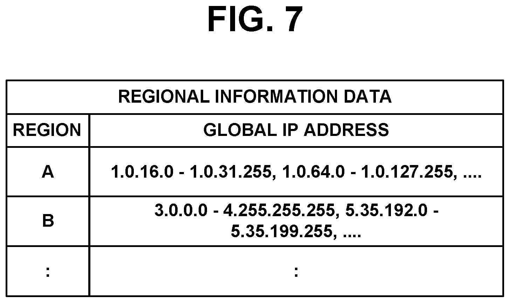

The storage 103 stores regional information data that are data of the regional information and the global IP address associated with each other. FIG. 7 illustrates an example of the regional information data of the regional information and the global IP address associated with each other. The regional information data illustrated in FIG. 7 is also stored in the memory 14.

In the table in FIG. 7, the region is associated with the global IP address. The data in the first row of the table in FIG. 7 indicates that the region "A" is assigned addresses, "1.0.16.0 - 1.0.31.255, 1.0.64.0 - 1.0.127.255" and the like.

For example, when the acquired location information has a latitude "3541.1493, N" and a longitude "13945.3994, E", the region determiner 102 identifies a region that includes the latitude "3541.1493, N" and the longitude "13945.3994, E" by reference to the table in FIG. 6. Since the latitude "3541.1493, N" and the longitude "13945.3994, E" are values included in the "region A", the region determiner 102 determines that the "region A" is the region where the terminal device 200 exists.

When the acquired location information has an IP address "1.0.16.1", the region determiner 102 determines, by reference to the table in FIG. 7, that the "region A" assigned the IP address "1.0.16.1" is the region where the terminal device 200 exists.

When multiple types of location information are included, the region determiner 102 determines the region based on each type of location information. When different regions are determined, the region determiner 102 may determine the region based on a predetermined adoption priority of location information.

The connection destination determiner 104 determines, based on the determined region, the server device 300 to which the terminal device 200 is to connect. The connection destination determiner 104 is implemented by the processor 11. The connection destination determiner 104 is an example of connection destination determination means.

Here, the server device 300 to which the terminal device 200 is to connect refers to a secure server device 300 that can avoid a risk of non-compliance with laws and regulations on processing of data acquired from the terminal device 200. Since the laws and regulations are generally defined for each region, the data acquired from the terminal device 200 can be considered to be secure in a situation where the server device 300 in the same region processes the data. Thus, in the present embodiment, the connection destination determiner 104 recognizes that the server device 300 existing in the same region as the terminal device 200 is the server device 300 that avoids a risk of non-compliance with the laws and regulations on processing of data acquired from the terminal device 200, and determines that the server device 300 existing in the same region as the terminal device 200 is the server device 300 to which the terminal device 200 is to connect.

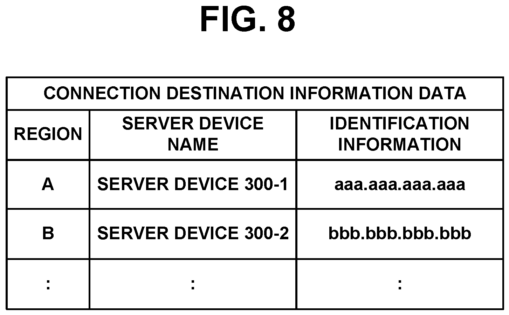

For example, the storage 103 stores connection destination information data that is data of the regional information indicating a region and identification information for identifying the server devices 300 located in the regions indicated by the regional information, in association with each other. The identification information is information, such as IP address, for designating a communication partner. FIG. 8 illustrates an example of the connection destination information data. The connection destination information data illustrated in FIG. 8 is stored in the memory 14.

In the table in FIG. 8, the region is associated with the server device name of the server device 300 located in the region and the identification information on the server device 300. The data in the first row of the table in FIG. 8 indicates that the server device 300 located in the region "A" has the server device name "server device 300-1" and is identified by the identification information "aaa.aaa.aaa.aaa".

For example, the connection destination determiner 104 of the connection management device 100-1 included in the terminal device 200-1 refers to the connection destination information data illustrated in FIG. 8, and thereby determines that, among the server devices 300-1, 300-2, ..., and 300-n, the server device 300-1 associated with the same region A as the terminal device 200-1 is the server device 300 to which the terminal device 200-1 is to connect.

The transmitter 105 transmits, to the determined server device 300, the request for connection. The transmitter 105 is implemented by cooperation of the processor 11 with the network interface 15. The transmitter 105 is an example of transmission means and a first transmission means.

For example, the transmitter 105 refers to the connection destination information data in FIG. 8, thereby specifies identification information on the server device 300-1 determined to be the destination server device 300 to be connected to, and transmits a request for connection to the server device 300-1 using the specified identification information.

The request for connection includes identification information for identifying the terminal device 200, which is necessary for reception of a response from the server device 300. The request for connection may also include information with which the user of the terminal device 200 can be identified, because the determined server device 300 is determined to be a secure server device 300 that can avoid the risk of non-compliance with the laws and regulations on processing of the data acquired from the terminal device 200.

For example, the request for connection transmitted to the server device 300-1 includes the IP address of the terminal device 200-1 and personal information on the user of the terminal device 200-1. Here, the personal information is information with which, alone or in combination, an individual can be identified. Examples of the personal information include a name, address, email address, phone number, sex, and age.

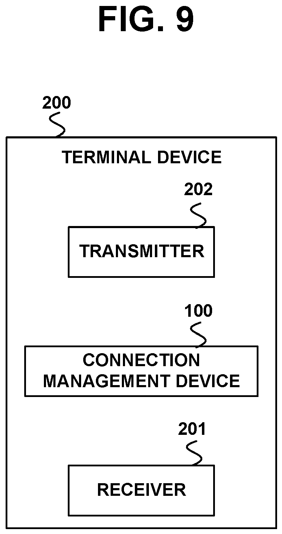

Next, functions of the terminal device 200 are described with reference to FIG. 9. The terminal device 200 includes the connection management device 100, a receiver 201 that receives a response from the server device 300, and a transmitter 202 that transmits data to the server device 300.

The receiver 201 receives from the server device 300 the response to the request for connection. The receiver 201 is implemented by cooperation of the processor 11 and the network interface 15. The receiver 201 is an example of first reception means.

The response includes a message of connection admission or successful reception of the request for connection. The reception of the response to the request for connection is deemed as successful establishment of connection between the terminal device 200 and the server device 300. After establishment of the connection, sending and receiving of data necessary for the user of the terminal device 200 to receive services is started between the terminal device 200 and the server device 300.

For example, the receiver 201 of the terminal device 200-1 receives, from the server device 300-1 determined by the connection management device 100-1 as a connection destination of the terminal device 200-1, a response indicating connection admission. After establishment of the connection to the server device 300-1, the receiver 201 of the terminal device 200-1 receives from the server device 300-1 control information for automatic control of the air conditioner 500-1.

The response to the request for connection may include the control information related to services. That is, the automatic control of the air conditioner may be started at the same time as the establishment of the connection between the terminal device 200 and the server device.

The transmitter 202 transmits personal information on the user and data related to operations of the air conditioner after the establishment of the connection between the terminal device 200 and the server device 300,. The transmitter 202 is implemented by cooperation of the processor 11 and the network interface 15.

For example, the transmitter 202 transmits personal information data, including personal information and an operation history of the air conditioner, which is described below, to the server device 300.

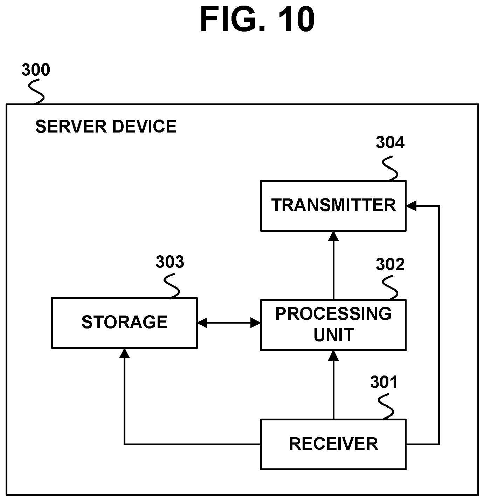

Next, functions of the server device 300 are described with reference to FIG. 10. The server device 300 includes a receiver 301 that receives a request for connection, a processing unit 302 that performs processing for providing services, a storage 303 that stores information associated with the user of the terminal device 200, and a transmitter 304 that transmits to the terminal device 200 a response.

The receiver 301 receives a request for connection transmitted by the connection management device 100. The receiver 301 is implemented by cooperation of the processor 21 and the network interface 25. The receiver 301 is an example of second reception means.

For example, the receiver 301 of the server device 300-1 receives a request for connection transmitted by the connection management device 100-1.

After establishment of connection between the terminal device 200 and the server device 300, or at the time of reception of the request for connection, the receiver 301 receives from the terminal device 200 data necessary for providing services. For example, the receiver 301 receives the personal information data including personal information and an operation history of the air conditioner, from the terminal device 200.

The processing unit 302 performs, by reference to the data stored in the storage 303, various types of processing for the server device 300 to provide services. The processing unit 302 is implemented by the processor 21.

Specifically, the processing unit 302 generates control information of the air conditioner based on the data stored in the storage 303.

The storage 303 stores the data transmitted by the terminal device 200.

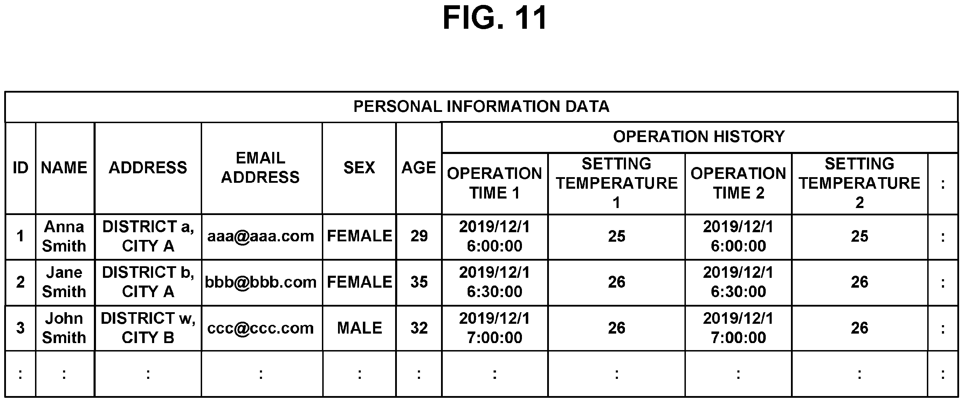

FIG. 11 illustrates an example of data stored in the storage 303. The personal information data illustrated in FIG. 11 is stored in the memory 24. The personal information data is data generated for the user of the terminal device 200 after establishment of secure connection between the terminal device 200 and the server device 300, or at the time of reception of the request for connection.

The table in FIG. 11 includes an identification (ID) assigned to the user of the terminal device 200, name, address, email address, sex, and age of the user, and operation history of the air conditioner. The operation history includes an operation time that is a time when the user operates the air conditioner and a set temperature. The operation history is transmitted by the terminal device 200 every time the user operates the air conditioner using the application or is transmitted periodically.

After establishment of the connection to the terminal device 200, or at the time of reception of the request for connection, the processing unit 302 generates, by reference to the personal information data of FIG. 11, control information for automatic control of the air conditioner.

The transmitter 304 transmits a response indicating admission of connection with the server device 300, to the terminal device 200 including the connection management device 100 that has transmitted the request for connection. The transmitter 304 is implemented by cooperation of the processor 21 and the network interface 25.
The transmitter 304 is an example of second transmission means.

For example, the transmitter 304 of the server device 300-1, which has received the request for connection including the identification information on the terminal device 200-1, transmits a response indicating admission of connection with the server device 300-1 to the terminal device 200-1, using the identification information.

The transmitter 304 transmits to the terminal device 200 the data necessary for providing services, after establishment of connection between the terminal device 200 and the server device 300, or at the time of transmission of a response to the request for connection.

For example, the transmitter 304 of the server device 300-1 transmits the control information for the air conditioner 500-1 to the terminal device 200-1 after establishment of connection to the terminal device 200-1. Alternatively, the transmitter 304 of the server device 300-1 may transmit the response to the request for connection, to which the control information for the air conditioner 500-1 is added, to the terminal device 200-1.

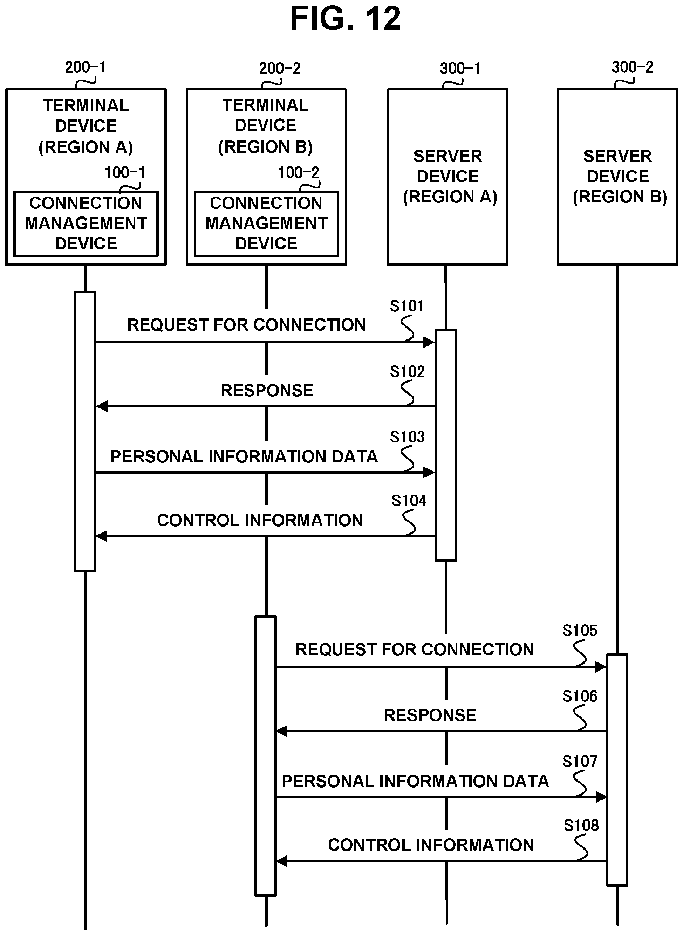

Next, an operation of the connection management system 1 according to the present embodiment is described. FIG. 12 is a sequence diagram illustrating a flow of process steps executed between the terminal devices 200 including the connection management devices 100 and the server devices 300. The sequence diagram in FIG. 12 indicates a flow of process steps in a case of the connection topology in FIG. 4.

Upon initial start of an application after installation in the terminal device 200-1 in the region A, the connection management device 100-1 included in the terminal device 200-1 executes a connection management process, which is described below, and transmits a request for connection to the server device 300-1 (Step S101). The server device 300-1 transmits a response indicating successful reception of the request for connection to the terminal device 200-1 (Step S102), and the terminal device 200-1 then transmits the personal information data to the server device 300-1 (Step S103). The server device 300-1 generates control information based on the personal information data stored in the storage 303 and transmits the control information to the terminal device 200-1 (Step S104).

Upon initial start of an application after installation in the terminal device 200-2 in the region B, the connection management device 100-2 included in the terminal device 200-2 executes the connection management process, which is described below, and transmits a request for connection to the server device 300-2 (Step S105). The server device 300-2 transmits a response indicating successful reception of the request for connection to the terminal device 200-2 (Step S106), and the terminal device 200-2 then transmits the personal information data to the server device 300-2 (Step S107). The server device 300-2 then generates control information based on the personal information data stored in the storage 303, and transmits the control information to the terminal device 200-2 (Step S108).

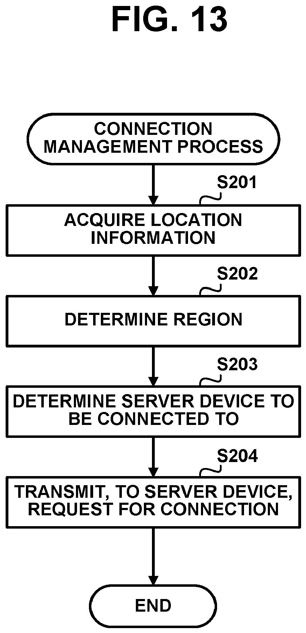

Next, the connection management process executed by the connection management device 100 according to the present embodiment is described using the flowchart of FIG. 13. The connection management process illustrated in FIG. 13 starts upon initial start of an application after installation in the terminal device.

The location information acquirer 101 acquires location information of the terminal device 200 (Step S201). Specifically, the location information acquirer 101 acquires the latitude and longitude or the global IP address of the terminal device 200.

In step 202, upon acquisition of the location information, the region determiner 102 determines the region associated with the location information by reference to the regional information data stored in the storage 103 (Step S202). The connection destination determiner 104 determines, based on the determined region, the server device 300 to be connected to (Step S203). Specifically, the connection destination determiner 104 determines that the server device 300 existing in the same region as the terminal device 200 is the server device 300 to which the terminal device 200 is to connect.

The transmitter 105 transmits, to the determined server device 300, a request for connection (Step S204), followed by termination of the connection management process in the connection management device 100.

With the globalization of services, the same application may be used in the terminal devices in different regions across borders. In such circumstances, the server device may not be able to identify the region where the terminal device performing communication exists. However, according to the connection management device according to the present embodiment, the region of the terminal device on which the application runs can be determined automatically without user's input. The connection management device according to the present embodiment can determine, based on the determined region, the server device that can avoid a risk of non-compliance with the laws and regulations on processing of data of the terminal device and may connect the terminal device automatically to the determined secure server device. This can achieve compliance with the laws and regulations.

Security standards on processing of data are different for different regions. Providing the server device in each region that provides services so as to satisfy the strictest security standards in the regions is technically difficult and costly. In addition, since the laws and regulations are updated independently in each region, providing the server device in each region so as to comply with all the laws and regulations is troublesome and difficult from the management perspective. Thus the server device in each region is preferably managed by a service provider in each region, an administrator of a service providing country, or the like so as to comply with the laws and regulations in each region and satisfy the security standards in each region. According to the present embodiment, since the data stored in the server device is data acquired from the terminal device existing in the same region as the data stored in the server device, the administrator can perform management so as to satisfy the laws and regulations and the security standards in the administrator's own region without worrying about the other region's laws and regulations and security standards in the other regions.

According to the present embodiment, by the terminal device including the connection management device, all of the data from the terminal device is transmitted to the server device located in the region that can avoid the risk of non-compliance with the laws and regulations on processing of data. This can certainly prevent personal information from being leaked to a region having risk of non-compliance with the laws and regulations.

According to the present embodiment, the connection management device transmits a request for connection of the terminal device to the secure server device that can avoid the risk of non-compliance with the laws and regulations on processing of data. The terminal device can therefore start transmission of data including personal information to the server device even in the initial stage of data transmission. This can achieve rapid data transfer.

### Modified Example

Although the embodiments of the present disclosure have been described, modifications and applications in various forms can be made to implement the present disclosure.

Although, in the above embodiments, the server device 300 includes a function of providing services and a function of storing information associated with a user of the terminal device 200, the configuration is not limited thereto and may be implemented by another device with each function.

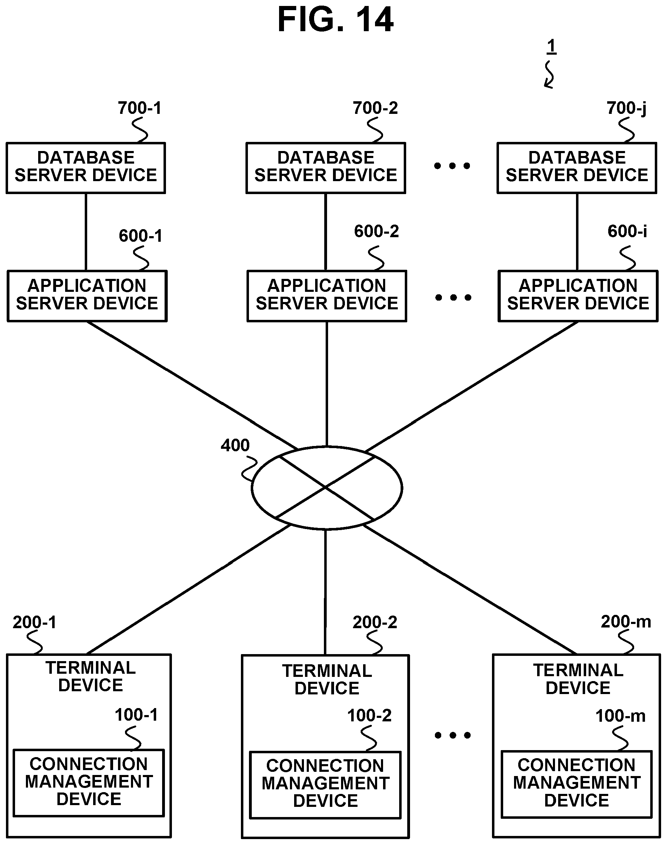

For example, as illustrated in FIG. 14, the connection management system 1 includes terminal devices 200-1, 200-2, ..., and 200-m (m is a natural number not less than 2) including connection management devices 100-1, 100-2, ..., and 100-m, application server devices 600-1, 600-2, ..., and 600-i (i is a natural number not less than 2), and database server devices 700-1, 700-2, ..., and 700-j (j is a natural number not less than 2). The application server devices 600-1, 600-2, ..., and 600-i are collectively referred to as application server devices 600, and the database server devices 700-1, 700-2, ..., and 700-j are collectively referred to as database server devices 700. In this connection management system 1, the application server device 600 may have the functions of the receiver 301, the processing unit 302, and the transmitter 304, while the database server device 700 may have the function of the storage 303.

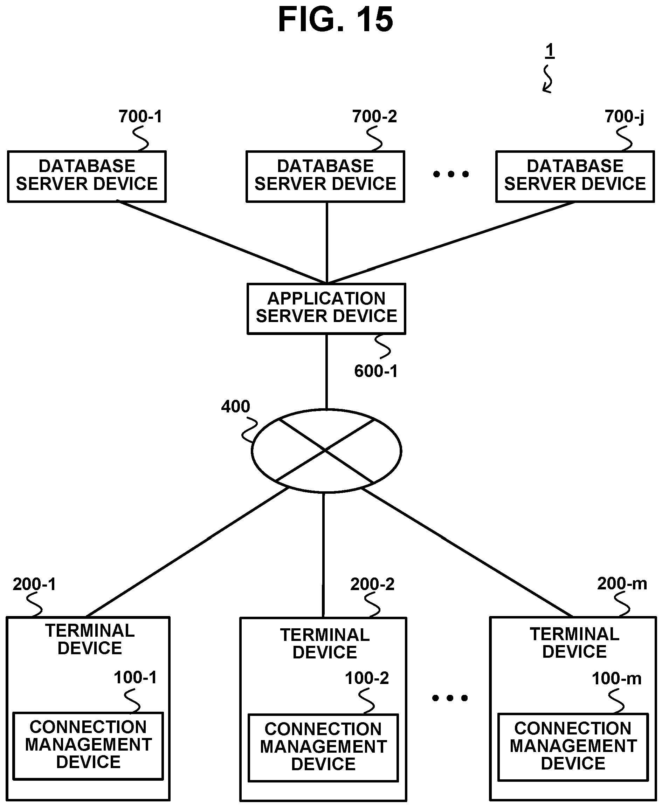

For example, as illustrated in FIG. 15, the connection management system 1 may include terminal devices 200-1, 200-2, ..., and 200-m (m is a natural number not less than 2) including connection management devices 100-1, 100-2, ..., and 100-m, an application server device 600-1, and database server devices 700-1, 700-2, ..., and 700-j (j is a natural number not less than 2). In this case, only the database server devices 700 are placed in mutually different regions. The application server device 600-1 in this modification is a secure server device that can avoid the risk of non-compliance with the laws and regulations on processing of data including personal information in all the regions.

Although, in the above embodiments, the connection destination determiner 104 determines that the server device 300 existing in the same region as the terminal device 200 is the server device 300 to which the terminal device is to connect, such configuration is not limiting. The connection destination determiner 104 can determine, as the server device 300 to be connected to, any server device that can avoid a risk of non-compliance with the laws and regulations. For example, in a case where the laws and regulations in the region where the terminal device 200 exits allows transfer and storage of data in a particular region that is different from the region where the terminal device 200 exists, the server device 300 existing in the particular region may be included in the server devices 300 to be connected to. The connection destination determiner 104 may determine the server device 300 to be connected to, based on not only the laws and regulations but also a contract in each region.

Although, in the above embodiment, the regional information data in FIGS. 6 and 7 are assumed to be stored in the storage 103 of the connection management device 100, such configuration is not limiting. The types of regional information data to be stored in the storage 103 may be determined in accordance with the location information acquired by the location information acquirer 101. For example, in a case where the location information acquired by the location information acquirer 101 is only latitude and longitude, storage of only the regional information data in FIG. 6 by the storage 103 is permissible.

Although the functions of the connection management device 100 are achieved by execution of the application installed in the terminal device 200 in the above embodiment, this configuration is a mere example. The functions of the connection management device 100 may also be achieved by execution of a program for the connection management process, independently from execution of the application. Alternatively, some of the functions of the connection management device 100 may be achieved by execution of the application, while the rest of the functions of the connection management device 100 may be achieved by execution of a program for the rest of the functions.

Although the connection management process is executed upon initial start of an application after installation in the above embodiment, this configuration is a mere example. For example, the connection management process may also be executed in response to an instruction from the user of the terminal device 200 if the user moves to another region due to relocation. Alternatively, the connection management process may be executed in response to a predetermined operation of the user. In this case, the request for connection may contain an operation history.

Although, in the above embodiments, the server device 300 included in the connection management system 1 is assumed to provide services of automatic control of an air conditioner, such configuration is not limiting. For example, the server device 300 may provide services for control of various devices and systems, such as an illumination device, home appliances such as a refrigerator, a hot-water supply system, a ventilation system, and the like. The server device 300 may be any server device 300 that can transmit and receive data to and from the terminal device 200, without being a device that provides services. For example, the server device 300 may manage personal data transmitted by the terminal device 200.

By applying an operation program defining an operation of the connection management device 100 according to the embodiment to an existing personal computer or an information terminal device, the personal computer or the information terminal device can be made to function as the connection management device 100 according to the embodiment..

Any method for distribution of such a program can be adopted. For example, the program may be stored and distributed on a computer-readable recording medium such as a compact disk read-only memory (CD-ROM), a digital versatile disk (DVD), a memory card, or may be distributed via a communication network such as the Internet.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Industrial Applicability

The present disclosure can provide a connection management device, a connection management system, a connection management method, and a program that are capable of automatic connection of a terminal device to a secure server that avoids a risk of non-compliance with laws and regulations.

### Reference Signs List

1 Connection management system
11,21 Processor
12,22 ROM
13,23 RAM
14,24 Memory
15, 25 Network interface
16 GPS module
100, 100-1, 100-2, 100-m Connection management device
101 Location information acquirer
102 Region determiner
103,303 Storage
104 Connection destination determiner
105, 202, 304 Transmitter
200, 200-1, 200-2, 200-m Terminal device
201,301 Receiver
300, 300-1, 300-2, 300-n Server device
302 Processing unit
400 Network
500-1, 500-2 Air conditioner
600, 600-1, 600-2, 600-i Application server device
700, 700-1, 700-2, 700-j Database server device

## Claims

1. A connection management device included in a terminal device capable of communicating with a plurality of server devices, the connection management device comprising:
location information acquisition means for acquiring location information indicating a location where the terminal device exists;
region determination means for determining, based on the location information acquired by the location information acquisition means, a region where the terminal device exists;
connection destination determination means for determining, based on the region determined by the region determination means, which of the plurality of server devices is the server device to which the terminal device is to connect; and
transmission means for transmitting, to the server device determined by the connection destination determination means, a request for connection to connect to the server device.

2. The connection management device according to claim 1, wherein the connection destination determination means determines that, among the server devices, a server device that avoids risk of non-compliance with laws and regulations on processing of data acquired from the terminal device is the server device to be connected to by the terminal device.

3. The connection management device according to claim 2, wherein the connection destination determination means recognizes that, among the server devices, a server device existing in a region that is the same as that of the terminal device is the server device that avoids risk of non-compliance with the laws and regulations on the processing of data acquired from the terminal device.

4. The connection management device according to any one of claims 1 to 3, further comprising:
storage means for storing, in association with each other, the location information and regional information, wherein
the region determination means regards, as the region where the terminal device exits, a region indicated by the regional information associated in the storage means with the location information acquired by the location information acquisition means.

5. The connection management device according to any one of claims 1 to 4, wherein the location information is information indicating latitude and longitude of the terminal device.

6. The connection management device according to any one of claims 1 to 5, wherein the location information is a global Internet Protocol (IP) address used by the terminal device.

7. The connection management device according to any one of claims 1 to 6, wherein the location information is information indicating latitude and longitude of a base station connected by the terminal device.

8. The connection management device according to any one of claims 1 to 7, wherein the server device controls an air conditioner via the terminal device.

9. A connection management system in which a terminal device comprising a connection management device and a plurality of server devices are communicatively connected to one another, wherein
the connection management device comprises:
location information acquisition means for acquiring location information indicating a location where the terminal device exists;
region determination means for determining, based on the location information acquired by the location information acquisition means, a region where the terminal device exists;
connection destination determination means for determining, based on the region determined by the region determination means, which of the plurality of server devices is the server device to which the terminal device is to connect; and
first transmission means for transmitting, to the server device determined by the connection destination determination means, a request for connection to connect to the server device,
the terminal device comprises first reception means for receiving from the server device a response to the request for connection, and
each of the plurality of server devices comprises:
second reception means for receiving from the connection management device the request for connection; and
second transmission means for transmitting the response to the terminal device comprising the connection management device having transmitted the request for connection.

10. A connection management method comprising:
acquiring, by location information acquisition means, location information indicating a location where the terminal device exists;
determining, by region determination means, based on the location information acquired by the location information acquisition means, a region where the terminal device exists;
determining, by connection destination determination means, based on the region determined by the region determination means, which of a plurality of server devices is the server device to which the terminal device is to connect; and
transmitting, by transmission means, to the server device determined by the connection destination determination means a request for connection to connect to the server device.

11. A program causing a computer to function as:
location information acquisition means for acquiring location information indicating a location where the terminal device exists;
region determination means for determining, based on the location information acquired by the location information acquisition means, a region where the terminal device exists;
connection destination determination means for determining, based on the region determined by the region determination means, which of a plurality of server devices is the server device to which the terminal device is to connect; and
transmission means for transmitting, to the server device determined by the connection destination determination means, a request for connection to connect to the server device.
